# EUROPEAN PATENT APPLICATION

(11) **EP 1 736 886 A1**
(43) Date of publication of application: **27.12.2006**
(21) Application number: 06115535.4
(22) Date of filing: 15.06.2006
(51) Int. Cl.: G06F 12/08, H04L 29/08, G06Q 40/00

(54) **Methods for configuring cache memory size**

(30) Priority: 15.06.2005 US 153267
(71) Applicant: Cinnober Financial Technology AB, 112 46 Stockholm (SE)
(72) Inventor: Asplund, Johan, 182 50, Danderyd (SE)
(74) Representative: Pierrou, Mattias

(57) **Abstract**

The present invention relates to a method, a system, computer readable medium and a computer program product for electronic trading systems. The method for configuring a cache memory of a computer network system (10) communicating with a plurality of clients (12a, 12b, 12c) via communication network (15), the system (10) comprising a processing means (16) adapted to process incoming messages from the clients (12a, 12b, 12c) and a publishing means (18), comprises the steps of: making (30) at least one copy of the messages to be published by means of multicasting; and storing (34) the copies in a cache memory (22) of the publishing means (18); providing (32) each copy with a time stamp indicating the point of time the corresponding message was sent; and removing (36) a copy from the cache memory (22) when the copy has been stored a predetermined period of time.

## Description

### TECHNICAL AREA

The present invention generally relates to computer networks such as electronic trading systems for trading stocks, bonds, futures, options and other financial instruments as well as betting and e-gaming, and in particular to methods, computer readable mediums and computer program products for such systems.

### BACKGROUND OF THE INVENTION

During the last decade, almost all the world's exchanges and marketplaces have introduced electronic trading systems. These systems either replace the traditional trading floors or are used as complements to them. Today a large number of exchanges throughout the world utilizes electronic trading to trade stocks, bonds, futures, options and other financial instruments. These electronic exchanges generally includes three basic components, namely server computers (host), communication servers, and the exchanges participants' computers (client). The host constitutes, so to speak, the heart of the electronic trading system. The hosts operations include, for example, order-matching, maintaining order books and positions or price information. Participants, e.g. traders, are capable of communicating with the host by means of high speed data lines, high speed communications servers and the Internet. Thus, the traders can participate in the market by means of the clients communicating with the host.

A fundamental property of such financial messaging networks is the ability to deliver information from one sender, for example, the host, to a large number of recipients, for example, the clients. This introduces the need for multicasting technologies in order to avoid the high bandwidth requirements that would be the result of a plurality of point-to-point connections (i.e. sending the message once for each recipient). At the same time, it is of outermost importance that recipients receive all messages, which means that no message is allowed to be lost in the transmission. In order to achieve this, the sender keeps sent messages in a cache. Thereby, the sender is able to re-send a message if necessary.

In the vast majority of communication applications, including financial networks such as electronic trading systems, messages are sent partly over unreliable networks even if the sender itself operates in a so called reliable multicast system. A reliable multicast system is a system where a message is broadcasted to multiple recipients at the same time but where it is also guaranteed that all messages reach the intended recipients in order and without any gaps. Thus, normally, since the messages are sent partly over unreliable networks, it can not be guaranteed that all messages reach the intended recipient in due order and messages may be lost in the network during the transmission. However, if a message sent by multicast is lost for some reason, the receiver will detect this and request a re-transmission of that particular message. This means that the sender is required to maintain a cache of sent messages in order to be able to service re-transmission requests from the clients.

Accordingly, dimensioning the size of the cache is an important task when operating such a system, a task which usually is difficult due to the fact that the size of the cache must be large enough to accommodate all recent messages that may be requested by the clients at the same time as it must be as small as possible in order not to waste system resources (i.e. memory resources) in the sender environment. Once a message no longer is kept in the cache, retransmission request from the clients can no longer be serviced for that particular message. This results in an irrecoverable error in the transmission, i.e. the reliable stream of messages is no longer available for the receiving application. If the cache size is configurable but the message rate is unknown at the time of configuration of the cache size, the cache size cannot defined in an effective way with respect to reliability and system load. For example, at a message rate of 100 messages/second, a cache size of 1000 messages will only be able to hold 10 second's message load, but at a rate of 10 messages/second, it will be able to hold messages being up to 100 seconds old. In this example, 10 seconds may be to short to service retransmission requests for clients having internal delays, hence jeopardizing the reliability of the transmission, while 100 seconds may be unnecessarily long and thus put an unnecessary load on the system in terms of waste of memory.

Thus, there is need of an improved method for configuring cache size of such multicast system in an effective way with respect to reliability and system load in terms of memory usage.

### SUMMARY OF THE INVENTION

An object of the present invention is to provide an improved method for configuring cache size of multicast systems, such as electronic trading systems for trading stocks, bonds, futures, options and other financial instruments as well as betting and e-gaming, in an effective way with respect to reliability and system load in terms of memory usage.

This and other objects are achieved according to the present invention by providing a system, a method, a computer program, and a computer readable medium having the features defined in the independent claims. Preferred embodiments are defined in the dependent claims.

In the context of the present invention, the term "latency" refers to a period of time (usually measured in seconds of milliseconds) between a message being submitted for publishing by the sending device until the same message is received by the receiving device.

According to a first aspect of the present invention, there is provided a method for configuring a cache memory of a computer network system communicating with a plurality of clients via a communication network, the system comprising a processing means adapted to process incoming messages from the clients and a publishing means adapted to distribute processed messages to the clients by means of multicasting via the communication network, the method comprising the steps of: making at least one copy of the messages to be published by means of multicasting; and storing the copies in a cache memory of the publishing means. The method is characterized by the steps of: providing each copy with a time stamp indicating the point of time the corresponding message was sent; and removing a copy from the cache memory when the copy has been stored a predetermined period of time.

According to a second aspect of the present invention, there is provided a publishing means of a computer network system communicating with a plurality of clients via communication network, the system further comprising a processing means adapted to process incoming messages from the clients, the publishing means being adapted to distribute processed messages to the clients by means of multicasting via the communication network, making at least one copy of each messages to be published by means of multicasting; and storing the copies in a cache memory of the publishing means. The publishing means comprises: means for providing each copy with a time stamp, the time stamp indicating the point of time the corresponding message was sent; and cache control means adapted to remove a copy from the cache memory when the copy has been stored a predetermined period of time.

According to third aspect of the present invention, there is provided a computer program product, which when executed on a computer, performs the method according to the first aspect of the present invention.

According to a further aspect of the present invention, there is provided a computer readable medium comprising instructions for bringing a computer to perform the method according to the first aspect of the present invention.

Thus, the invention is based on the idea of configuring the size of the cache memory in time, e.g. as a number of seconds, instead of number of messages. The size of the cache memory is accordingly determined to be large enough to hold all messages that are less than a predetermined period of time old. Since it is usually easy to determine a maximum allowed message latency, configuring the size of the cache in time has been found by the inventor to be a very effective way of determining a proper size with respect to transmission reliability and system resources.

As mentioned above, a too small cache size may result in irrecoverable errors in the transmission, i.e. the reliable stream of messages is no longer available for the receiving application, due to the fact that messages are removed from the cache too early. A too large cache memory results instead in an unnecessary waste of system resources, i.e. storage capacity. In the prior art where the cache size is defined in terms of number of messages it is very difficult to obtain a proper size of the cache mainly due to the fact that the messages rate often may vary significantly from time to time. For example, at a message rate of 100 messages/second, a cache size of 1000 messages will only be able to hold 10 second's message load, but at a rate of 10 messages/second, it will be able to hold messages being up to 100 seconds old. In this example, 10 seconds may be to short to service retransmission requests for clients having internal delays, hence jeopardizing the reliability of the transmission, while 100 seconds may be unnecessarily long and thus put an unnecessary load on the system in terms of waste of memory.

According to a preferred embodiment of the present invention, the predetermined period of time a particular message is stored in the cache of a multicast system is configurable. Thereby, it is possible to adapt the cache size to the latentcy of the clients of that system and, hence, the cache size can be optimized in terms of reliability and usage of storage capacity.

In another embodiment of the present invention, the check whether the cache memory contains any message being stored at least said predetermined period of time is performed on a periodic basis. This means that the cache control means regularly removes messages that have been stored a period of time longer or having an equal length as the predetermined storage time for messages, which is verified by means of the time stamps of the messages. Thereby, the growth of the cache size is held under control since messages stored longer than the predetermined storage period regularly is removed and the cache is not allowed to grow too large.

In yet another embodiment of the present invention, the frequency for the periodic checking of the cache is configurable. Hence, it is possible to more accurately regulate the growth of the cache size since the removal of messages stored longer than the predetermined storage period can be adjusted.

As realized by the person skilled in the art, the methods of the present invention, as well as preferred embodiments thereof, are suitable to realize as a computer program or a computer readable medium.

The features that characterize the invention, both as to organization and to method of operation, together with further objects and advantages thereof, will be better understood from the following description used in conjunction with the accompanying drawings. It is to be expressely understood that the drawings is for the purpose of illustration and description and is not intended as a definition of the limits of the invention. These and other objects attained, and advantages offered, by the present invention will become more fully apparent as the description that now follows is read in conjunction with the accompanying drawings.

### SHORT DESCRIPTION OF THE DRAWINGS

In the following description of an embodiment of the invention, reference will be made to the accompanying drawings of which:
- Fig. 1: is a general view of a conventional electronic trading system;
- Fig. 2: shows schematically a sending host according to an embodiment of the present invention;
- Fig. 3: shows schematically the general principles of the method for multicasting transaction according to the present invention; and
- Fig. 4: shows schematically the steps performed in an embodiment the method for an electronic trading system according to the present invention.

### DETAILED DESCRIPTION OF THE INVENTION

In the following there will be discussed preferred embodiments of the method and system for configuring cache size of a sending device of a computer network, such as an electronic trading system. As the skilled man realizes, the invention can be implemented in any computer network employing a multicasting technology even if the invention in the context of this application is described as implemented within the contents of an electronic trading system.

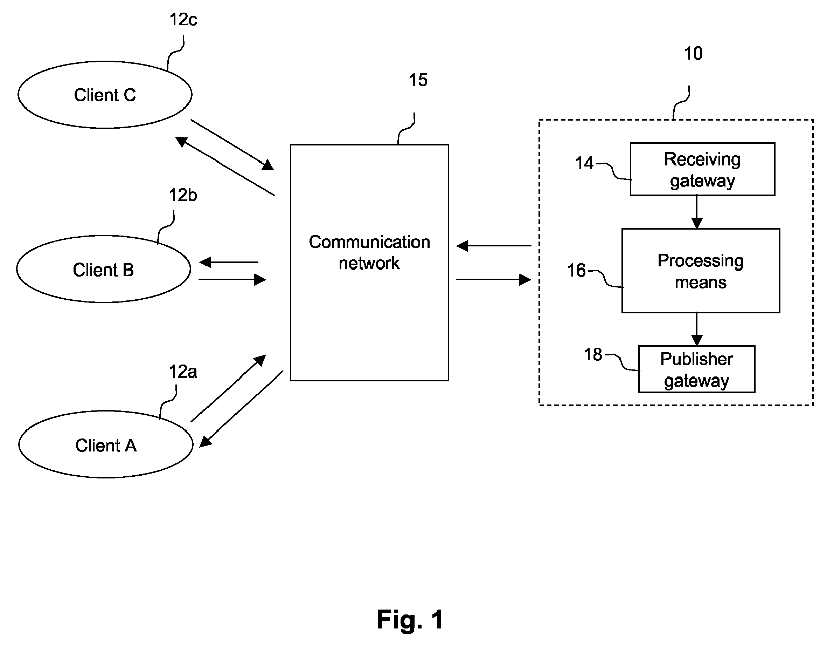

With reference first to Fig. 1, a conventional electronic trading system in which the present invention can be implemented will be discussed. A number of clients, here indicated by client A 12a, client B 12b, and client C 12c, communicate with the trading or exchange system 10. Thus, traders can participate in the market by means of the clients 12a-12c communicating with the exchange system 10. The clients 12a-12c may link to the system 10 via high speed data lines, high speed communication servers, or the Internet. High speed data lines establish direct connection between a client and the system. Connection can also be established between the client and the system by configuring high speed networks or communication servers at strategic access points in locations where traders physically are located. Internet is a third communication means enabling traders, using, for example, the clients 12a-12c, can communicate using, for example, high speed data lines connected to the Internet. Hence, traders are allowed to be located anywhere they can establish a connection to the Internet.

The system 10 comprises a receiving gateway 14 arranged to receive incoming messages or transactions, for example, an order to buy a stock at a defined price from the clients 12a-12c. Thereafter, the transactions are sent by the receiving gateway 14 to a processing means 16 containing business logic where the transactions are processed in accordance with the logic. The results are, in turn, sent further on to a publisher gateway 18, which publishes the results. The functions and design of the processing means, as well a the receiving gateway and the publisher gateway, are not described in further detail herein as they are well known to the man skilled within the art. The publisher gateway 18 may, for example, be adapted to send messages containing results of a processed incoming transaction from one clients 12a-12c back to all the clients 12a-12c. This kind of communication with the clients is preferably performed by means of a multicasting technology, which will be explained in more detail hereinafter.

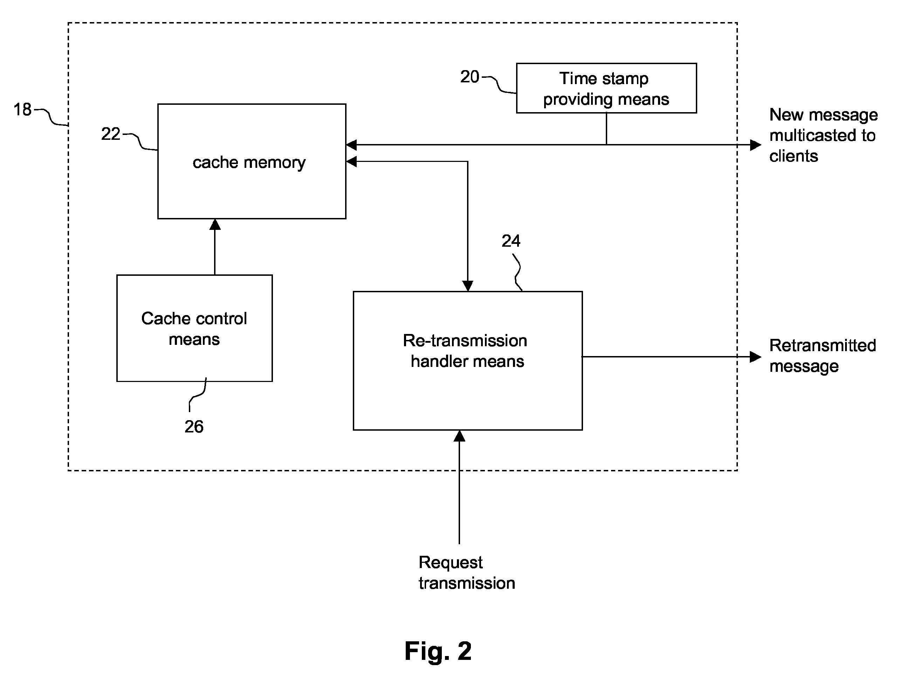

Turning now to Fig. 2, one embodiment of the publishing means according to the present invention will be described. The publishing means 18 is, as mentioned above, adapted to distribute messages, e.g. messages processed in the processing means 16, to a plurality of clients 12a, 12b, 12c by means of multicasting via a communication network 15. According to this embodiment, the publishing means 18 is adapted to make at least one copy of each messages to be published or distributed by means of multicasting and to store each copy in a cache memory 22 of the publishing means 18. Furthermore, the publisher means 18 comprises means for providing each copy with a time stamp 20, which time stamp indicates the point of time the corresponding message was sent. This can be performed in accordance with by means of conventional practice within the art. The publishing means 18 also includes a cache control means 26 adapted to remove a copy from the cache memory 22 when the copy has been stored a predetermined period of time. This is performed by checking the time stamp of the messages (or the copies of messages) in the cache memory 22. According to a preferred embodiment of the present invention, this predetermined period of time a copy is stored is configurable.

Preferably, the cache control means 26 is adapted to periodically check whether the cache memory 22 contains any message being stored at least the predetermined period of time and if such a message is identified remove that particular message. The length of the intervals between these periodic checks is in one embodiment configurable or, in other words, the frequency for the period checks is configurable. Accordingly, the lengths of the intervals can be determined to have equal lengths. As an alternative, the lengths of the intervals can be set to vary during the life span of a multicast session. Hence, the length can be adapted to a multicast session where the message rate is very high during a certain part of the life span and low during other parts.

According to an embodiment, the publishing means 18 also comprises re-transmissions handler means 24 adapted to receive re-transmission requests from a client 12a, 12b, 12c requesting a re-transmissions of a missing message in an incoming message sequence of the client 12a, 12b, 12c. At recipient of such a request, the re-transmission handler means is adapted to perform a search in the cache memory 22 for a copy of the particular message. If the copy is identified or found in the cache memory 22, the re-transmission handler 24 is adapted to retrieve the message copy from the cache memory 22 and to send the message copy to the client 12a, 12b, 12c via the communication network 15. According to another embodiment of the present invention, the re-transmission handler means 24 is adapted to send the requested message copy to all the clients 12a, 12b, 12c by means of a multicasting transaction via the communication network 15.

However, if a copy of the requested message could not be found in the cache memory 22, the re-transmission handler means 24 is adapted to send a notification to the client 12a, 12b, 12c requesting the re-transmission informing that particular client that the requested message could not be found.

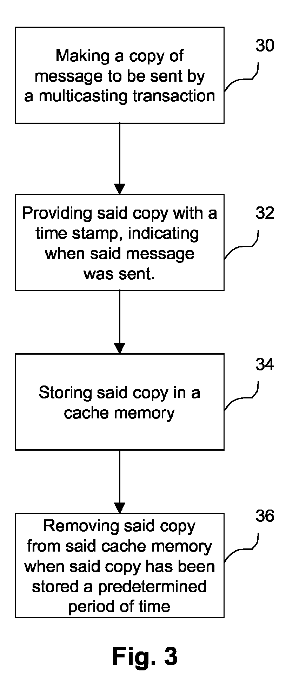

With reference to Fig. 3, the general principles of the method for an electronic trading system according to the present invention will be discussed. First, in step 30, at least one copy of a message to be published by means of multicasting is made by the publishing means 18. Then, in step 32, the copy is provided with a time stamp indicating the point of time the corresponding message was sent. Thus, the message can be sent after the copy has been made and the copy is provided with the time stamp substantially simultaneously as the message is sent. However, it is not necessary to provide the copy with the time stamp substantially simultaneously as the message is sent, but the copy with the time stamp after a period of time after the message was sent. Thereafter, at step 34, the copy is stored the cache memory 22. As the skilled man realizes, the copy can first be stored in the cache 22, and then be provided with the time stamp. Finally, at step 36, the copy is removed from the cache memory 22 by the cache control means 26 when the copy has been stored a predetermined period of time, which can be performed by utilizing the time stamp. This check can, as described above, be performed on a periodic basis.

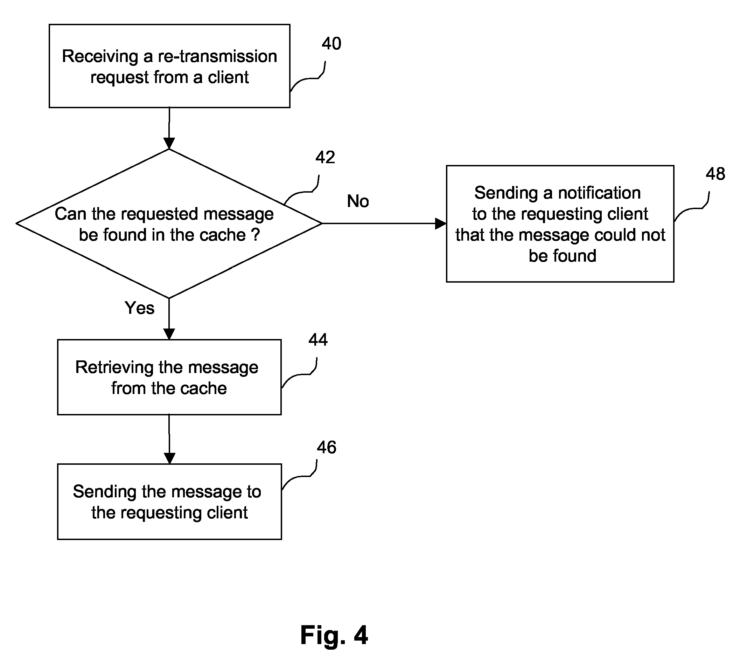

Referring now to Fig. 4, an embodiment of the method for an electronic trading system according to the present invention will be discussed. First, at step 40, a re-transmission request from a client 12a, 12b, 12c requesting a re-transmissions of a missing message in an incoming message sequence of the client is received by the re-transmission handler means 24. Then, at step 42, a search in the cache memory 22 for a copy of the requested message is performed. If the copy is found in the cache memory 22, the procedure proceeds to step 44 where the copy of the requested message is retrieved from the cache memory 22. Subsequently, the copy is sent the requesting client via the communicating network 15. As an alternative, the copy of the message is sent to all clients 12a, 12b, 12c by means of a multicasting transaction via the communication network 15. However, if the message copy not could be found in the cache 22, the procedure proceeds to step 48 where a notification is sent to the requesting client informing that particular client that the copy of the message not could be found.

Although specific embodiments have been shown and described herein for purposes of illustration and exemplification, it is understood by those of ordinary skill in the art that the specific embodiments shown and described may be substituted for a wide variety of alternative and/or equivalent implementations without departing from the scope of the invention. Those of ordinary skill in the art will readily appreciate that the present invention could be implemented in a wide variety of embodiments, including hardware and software implementations, or combinations thereof. As an example, all functions of the inventive method and the system can be implemented in a server connected to a large number of sending systems and receiving systems. This application is intended to cover any adaptations or variations of the preferred embodiments discussed herein. Consequently, the present invention is defined by the wording of the appended claims and equivalents thereof.

## Claims

1. A method for configuring a cache memory of a computer network system (10) communicating with a plurality of clients (12a, 12b, 12c) via communication network (15), said system (10) comprising a processing means (16) adapted to process incoming messages from said clients (12a, 12b, 12c) and a publishing means (18) adapted to distribute processed messages to said clients (12a, 12b, 12c) by means of multicasting via said communication network (15), said method comprising the steps of: making (30) at least one copy of said messages to be published by means of multicasting; and storing (34) said copies in a cache memory (22) of said publishing means (18), said method being **characterized by** the steps of:
providing (32) each copy with a time stamp indicating the point of
time the corresponding message was sent; and
removing (36) a copy from said cache memory (22) when said copy has been stored a predetermined period of time.

2. The method according to claim 1, wherein said predetermined period of time is configurable.

3. The method according to claim 1, further comprising the step of:
periodically (36) checking whether said cache memory (22) contains any message being stored at least said predetermined period of time.

4. The method according to claim 3, wherein a frequency for said periodic checking is configurable.

5. The method according to claim 1, further comprising the steps of:
receiving (40) re-transmission request from a client (12a, 12b, 12c)
requesting a re-transmissions of a missing message in an incoming message sequence of said client (12a, 12b, 12c);
searching (42) in said cache memory (22) for a copy of said message; and
if said copy is identified in said cache memory (22), retrieving (44)
said message copy from said cache memory (22).

6. The method according to claim 5, further comprising the step of:
sending (46) said message copy to said client (12a, 12b, 12c) via said communication network (15).

7. The method according to claim 5, further comprising the step of:
sending (46) said message copy to said plurality of clients (12a, 12b, 12c) by means of a multicasting transaction via said communication network (15).

8. The method according to claim 5, further comprising the step of:
if said copy not could be identified, sending (48) a notification to said client (12a, 12b, 12c) informing said client that said message not could be found.

9. The method according to claim 1, wherein said computer network system is an electronic trading system (10).

10. A publishing means (18) of a computer network system (10) communicating with a plurality of clients (12a, 12b, 12c) via communication network (15), said system (10) further comprising a processing means (16) adapted to process incoming messages from said clients (12a, 12b, 12c), said publishing means (18) being adapted to distribute processed messages to said clients (12a, 12b, 12c) by means of multicasting via said communication network (15), making at least one copy of each messages to be published by means of multicasting; and storing said copies in a cache memory (22) of said publishing means (18) **characterized in that** said publishing means comprises:
means for providing each copy with a time stamp (20), said time stamp indicating the point of time the corresponding message was sent; and
cache control means (26) adapted to remove a copy from said cache memory (22) when said copy has been stored a predetermined period of time.

11. The publishing means according to claim 10, wherein said predetermined period of time is configurable.

12. The publishing means according to claim 10, wherein said cache control means (26) is adapted to periodically check whether said cache memory (22) contains any message being stored at least said predetermined period of time.

13. The publishing means according to claim 12, wherein a frequency for said periodic checking is configurable.

14. The publishing means according to claim 10, further comprising:
re-transmissions handler means (24) adapted to receive re-transmission requests from a client (12a, 12b, 12c) requesting a re-transmissions of a missing message in an incoming message sequence of said client (12a, 12b, 12c); search in said cache memory (22) for a copy of said message; and if said copy is identified in said cache memory (22), retrieve said message copy from said cache memory (22).

15. The publisher means according to claim 14, wherein said re-transmission handler means (24) is adapted to send said message copy to said client (12a, 12b, 12c) via said communication network (15).

16. The publisher means according to claim 14, wherein said re-transmission handler means (24) is adapted to send said message copy to said plurality of clients (12a, 12b, 12c) by means of a multicasting transaction via said communication network (15).

17. The publisher means according to claim 14, wherein said re-transmission handler means (24) is adapted to, if said copy not could be identified, send a notification to said client (12a, 12b, 12c) informing said client that said message not could be found.

18. The publisher means according to claim 10, wherein said computer network system is an electronic trading system (10).

19. A computer program product, which when executed on a computer device, performs the steps in accordance with any of claim 1-9.

20. A computer readable medium comprising instructions for bringing a computer to perform the method according to any one of the claims 1-9.
